# EUROPÄISCHE PATENTSCHRIFT

(11) **EP 3 596 297 B1**
(45) Veröffentlichungstag und Bekanntmachung des Hinweises auf die Patenterteilung: **15.12.2021**
(21) Anmeldenummer: 18711503.5
(22) Anmeldetag: 06.03.2018
(51) Int. Cl.: E06C 1/36, E06C 7/18, E06C 7/16

(54) **GRABENVERBAU MIT EINEM LEITERSYSTEM**
TRENCH SHORING WITH A LADDER SYSTEM
L'ÉTAYAGE DE FOUILLES AVEC UN SYSTÈME D'ÉCHELLES

(30) Priorität: 15.03.2017 DE 102017105567
(43) Veröffentlichungstag der Anmeldung: 22.01.2020
(73) Patentinhaber: Klaus Stewering GmbH & Co. Kg Bauunternehmung, 46325 Borken (DE)
(72) Erfinder: HEITKAMP, Theo, 46325 Borken (DE); SCHMEINCK, Bernd, 46414 Rhede (DE)
(74) Vertreter: Freischem & Partner Patentanwälte mbB
(86) Internationale Anmeldenummer: PCT/EP2018/055391
(87) Internationale Veröffentlichungsnummer: WO 2018/166835

(56) Entgegenhaltungen:
- JP-U- S61 177 199
- KR-B1- 101 337 875
- US-A1- 2006 201 747
- US-B1- 6 607 053

## Beschreibung

Die Erfindung betrifft einen Grabenverbau mit einem Leitersystem gemäß dem Oberbegriff des Anspruchs 1.

Im Bereich des Tiefbaus werden häufig Gräben mit großen Grabentiefen eingesetzt. Die Grabenwände werden über seitliche Verbauplatten abgestützt. Die Verbauplatten werden durch Spreizsysteme auf Abstand gehalten. Moderne Verbausysteme ermöglichen Grabentiefen von über 5 m, sogar von über 8 m oder über 10 m. Um Arbeitern den Abstieg zum Grund eines verbauten Grabens zu ermöglichen, sind mehrere Leitersysteme bekannt.

Aus US 9,004,227 B2 ist ein Einstiegssystem für eine Leiter zur Verwendung im Grabenbau bekannt. Das Einstiegssystem weist eine Zugangsplattform auf, die außerhalb des Grabens auf dem Erdreich aufliegt und am oberen Rand einer Verbauplatte befestigt ist. Die Leiter wird an eine Leiterstütze angelehnt, so dass ein Arbeiter seitlich von der Plattform auf die Leiter steigen kann. Die Plattform und die Leiter können verbunden werden.

Aus KR 2016 0044 749 A ist ein Befestigungssystem zum lösbaren Befestigung einer Leiter an einer beweglichen Plattform bekannt. So kann die Höhe der Plattform variiert werden und bedarfsweise eine Leiter mit passgenauer Länge angehängt werden.

Aus US 6,907,957 B1 ist eine Leiter für den Grabenverbau bekannt, welche an einen oberen Rand einer Verbauplatte eingehängt wird. Die Leiter weist an ihrem oberen Ende eine Plattform auf, über die ein Arbeiter in den vertikal verlaufenden Sprossenbereich der Leiter einsteigen kann. Die Leiter kann bedarfsweise verlängert werden und so an eine variierende Grabentiefe angepasst werden, in dem ein Verlängerungsstück an eine der unteren Sprossen angehängt wird. Die Druckschrift KR 101 337 875 B1 zeigt eine aus mehreren teleskopierbaren Segmenten bestehende Auszugsleiter, die an einem Geländer befestigbar ist und deren unterste Segment eine Plattform aufweist. Diese Leiter ist nicht zur Befestigung an einer Verbauplatte geeignet. Die Druckschrift US 2006/201747 A1 offenbart eine am oberen Rand einer Kellerwand einhängbare Leiter mit einer Arbeitsplattform am unteren Ende. Die Arbeitsplattform ist dazu vorgesehen, einen Arbeiter über einem frisch vergossenen Estrich zu halten, um zu vermeiden, dass der Estrich beschädigt wird. Diese Anwendung hat folglich keine Berührungen mit dem Grabenbau. Die Druckschrift US 6 607 053 B1 offenbart einen Schachteinstieg für eine Schachtleiter. Die Druckschrift JP S61 177199 U betrifft ein Leitersystem für eine Schachtwand, an der Plattformen befestigt sind, wobei jeweils ein Leitersegment an einer oberen und an einer unteren Plattform festgeschraubt ist.

Aufgabe der Erfindung ist es, ein Leitersystem für den Grabenverbau zu schaffen, welches leicht zu handhaben ist und eine hohe Sicherheit der Arbeiter insbesondere bei tiefen Gräben gewährleistet.

Die Lösung der Aufgabe erfolgt erfindungsgemäß mit den Merkmalen des unabhängigen Anspruchs 1. Weitere praktische Ausführungsformen und Vorteile der Erfindung gehen aus den abhängigen Ansprüchen hervor.

Ein erfindungsgemäßer Grabenverbau mit Leitersystem umfasst mindestens eine Verbauplatte, eine untere Leiter, die sich vom Boden eines Grabens aus über einen unteren Teilabschnitt der Höhe des Grabens erstreckt und eine obere Leiter, die sich über einen oberen Teilabschnitt der Höhe des Grabens bis zu einem Grabenrand erstreckt. Bei der oberen Leiter handelt es sich um eine Einhängeleiter zum Einhängen an den oberen Rand der Verbauplatte. An dem unteren Ende der oberen Leiter ist eine Plattform angeordnet. Die untere Leiter ist eine auf dem Boden des Grabens aufstehende Stehleiter oder Anlegeleiter.

Die gesamte Höhe des Grabens kann somit mittels zwei Leitern überwunden werden. Die Sicherheit der Bauarbeiter, insbesondere gegenüber Abstürzen, wird bei dem erfindungsgemäßen Grabenverbau mit Leitersystem dadurch verbessert, dass die maximale Fallhöhe, d.h. die maximale Höhe bis zu einer darunter liegenden horizontalen Fläche, begrenzt ist. Für die obere Leiter ist die maximale Fallhöhe durch die am unteren Ende der oberen Leiter angeordnete Plattform begrenzt. Für die untere Leiter ist die Fallhöhe durch den Boden des Grabens begrenzt. Bevorzugt weisen beide Leitern dabei jeweils eine Höhe bzw. Länge von erheblich weniger als 10 m, und vorzugsweise weniger als 8 m und besonders bevorzugt von maximal 6 m auf.

Eine Einhängeleiter kann sicher und einfach am oberen Rand des Grabens positioniert werden. Die Einhängeleiter weist dazu vorzugsweise Haken zum Einhängen in den oberen Rand einer Verbauplatte auf. Durch eine solche Verbindung kann die obere Leiter entlang des oberen Randes der Verbauplatte verschoben werden und damit positioniert werden. Eine auf dem Boden des Grabens aufstehende Stehleiter oder eine Anlegeleiter bietet den Vorteil, dass sie kostengünstig und als Standardzubehör zu erwerben ist und keine besondere Anfertigung erfordert. Insbesondere eignet sich als untere Leiter eine Anlegeleiter, welche schräg zu einer Grabenwand oder Verbauplatte verläuft und sich dabei mit ihrem oberen Ende an der Grabenwand oder der Verbauplatte abstützt. Eine derartige Anlegeleiter kann platzsparend eingesetzt werden und bildet zusammen mit der oberen Einhängeleiter ein flexibles und leicht zu positionierendes Leitersystem. Die Anlegeleiter kann schnell an jeder gewünschten Stelle auf dem Grund des Grabens aufgestellt werden.

Der erfindungsgemäße Grabenverbau mit Leitersystem kann flexibel und bedarfsweise in jedem gewünschten Bereich eines Grabens positioniert werden. Insbesondere handelt es sich bei dem Leitersystem nicht um ein festinstalliertes System, welches dauerhaft mit einer Wand oder einem Bauwerk verbunden ist, sondern um ein leicht zu bewegendes und schnell zu montierendes System.

Für Gräben, die tiefer als 12 m sind, wird darauf hingewiesen, dass auch ein Leitersystem mit mehr als zwei Leitern verwendet werden kann, wobei sich die Leitern ebenfalls jeweils über einen Teilabschnitt des Grabens erstrecken. Dabei sind an allen oberen Leitern, das heißt an sämtlichen Leitern außer der untersten Leiter, Plattformen vorgesehen, die die maximale Fallhöhe der jeweiligen oberen Leiter begrenzen. Da bei verschiedenen Verbausystemen die Verbauplatten gestuft sind und eine äußere Verbauplatte den oberen Grabenabschnitt begrenzt und eine innere Verbauplatte den unteren Grabenabschnitt begrenzt, kann die erste obere Leiter am oberen Rand der äußeren Verbauplatte eingehängt werden und die zweite obere Leite am oberen Rand der inneren Verbauplatte. Die unterste Leiter steht wieder auf dem Grabengrund auf.

In der Praxis kann vorgesehen sein, dass die Plattform an dem unteren Ende der oberen Leiter eine Klappe aufweist, die von einem Arbeiter durchstiegen werden kann. In diesem Fall sind die obere Leiter und die untere Leiter genau untereinander angeordnet.

Alternativ dazu können die untere Leiter und die obere Leiter seitlich zueinander versetzt angeordnet sein, wobei sich die untere Leiter und die obere Leiter in einem Überlappungsbereich nebeneinander erstrecken. Bei einer derartigen seitlich versetzten Anordnung dient der Überlappungsbereich als Umstiegsbereich, in welchem ein Arbeiter von einer Leiter auf die andere Leiter umsteigen kann. Der Umstiegsbereich ist vorzugsweise derart gestaltet, dass ein Arbeiter, der auf Höhe der Plattform steht, seitlich von einer Leiter auf die andere Leiter übertreten kann und sich dabei jeweils in aufrechter Körperhaltung an einer der beiden Leitern festhalten kann. Insbesondere kann sich der Umstiegsbereich über eine Höhe von mindestens 60 cm, bevorzugt über eine Höhe von mindestens 80 cm und besonders bevorzugt über eine Höhe von mindestens 100 cm erstrecken.

In einer praktischen Ausführungsform sind die obere Leiter und/oder die untere Leiter höhenverstellbar. Damit kann das Leitersystem flexibel an verschiedene Tiefen, insbesondere an sich während der Bauarbeiten ändernde Tiefen des Grabens angepasst werden. Dabei kommen insbesondere Leitern mit einem teleskopartigen Auszug in Betracht. Alternativ dazu können auch unterschiedliche Leitern mit unterschiedlichen Längen verwendet werden.

Für das hier beschriebene Leitersystem eignet sich insbesondere ein System mit einer Einhängeleiter und einer Anlegeleiter. Damit kann in einfacher Weise eine hohe Flexibilität bezüglich der Position des Leitersystems im Graben erzielt werden und eine schnelles Auf- und Abbauen des erfindungsgemäßen Leitersystems am Grabenverbau erzielt werden.

Zur Erhöhung der Sicherheit der Arbeiter kann die Plattform am unteren Ende der oberen Leiter durch ein umlaufendes Geländer gesichert sein. Ein Geländer bewirkt insbesondere, dass ein Arbeiter gegen ein Herunterfallen von der Plattform gesichert wird, insbesondere wenn er von einer Leiter auf die andere Leiter umsteigt. In Geländer ist dabei vorzugsweise in mindestens 90 cm Höhe von der Plattform aus angeordnet.

Weiter können in an dem unteren Ende der oberen Leiter sich quer zur vertikalen Richtung erstreckende Stützfüße angeordnet, die sich gegen die Grabenwand abstützen. Insbesondere können die Stützfüße in ihrer Länge veränderbar sein. Damit kann die obere Leiter in Abhängigkeit der Dicke einer Verbauplatte oder des Abstandes der oberen Leiter von der Verbauplatte oder einer Grabenwand abgestützt werden und so vollständig vertikal, das heißt ohne Überhang ausgerichtet werden. Dadurch wird zusätzlich die Sicherheit der Arbeiter erhöht und ein Schwingen der Leiter, wie es beispielsweise von Strickleitern bekannt ist, vermieden.

In der Praxis kann an der oberen Leiter eine Einstiegshilfe angeordnet sein. Eine Einstiegshilfe ermöglicht einen sicheren Übergang von dem außerhalb des Grabens liegendem Erdreich auf die vertikal ausgerichtete Leiter. Bei der Einstiegshilfe kann es sich zum Beispiel um einen an einer Seite oder beidseitig der Leiter angeordneten Handlauf handeln, an dem sich ein Arbeiter festhalten kann.

Zusätzlich können an der oberen Leiter ein oder mehrere Rückenschutzbügel angeordnet sein, die die obere Leiter insbesondere in einem oberen Bereich in Richtung des Grabens in Form eines U oder eines Ringsegments umgeben.

Insbesondere kann eine Einstiegshilfe in Verbindung mit einem Rückenschutzbügel vorgesehen sein. Dazu ist am oberen Ende der oberen Leiter ein in der Höhe verstellbarer Rückenschutzbügel angeordnet. Der Rückenschutzbügel kann mit zwei seitlich der oberen Leiter angeordneten Streben sein, welche jeweils einen Handlauf bilden. Die Streben sind ausziehbar und arretierbar an einem Seitenteil der oberen Leiter befestigt, so dass die Höhe des obersten Rückenschutzbügels über dem oberen Leiterende verstellt wird. Die Verstellung kann zum Beispiel mit einem mittels des Fußes zu betätigenden Hebel realisierbar sein, der die Strebe auf gewünschter Höhe festklemmt. Diese Verstellvorrichtung ist leicht und sicher zu bedienen. Die Anordnung eines höhenverstellbaren Rückenschutzbügels im Bereich des Einstiegs erhöht weiter die Sicherheit der Arbeiter. Selbstverständlich können über die seitlichen Streben auch mehrere Rückenschutzbügel höhenverstellbar befestigt sein.

Um die Sicherheit weiter zu erhöhen, sind einer weiteren praktischen Ausführungsform die untere Leiter und die obere Leiter über ein Sicherungselement verbunden. Damit kann einem Verrutschen der unteren Leiter relativ zu der oberen Leiter entgegengewirkt werden. Ein derartiges Sicherungselement kann entweder zwei korrespondierende Haken umfassen.

Alternativ oder in Ergänzung dazu, kann die untere Leiter mittels Schraubklemmen an der oberen Leiter befestigt werden oder die beiden Leitern können über eine Kette oder Seil gesichert sein.

Die Verwendung des erfindungsgemäßen Grabenverbaus mit Leitersystems ermöglicht eine sichere und flexible Möglichkeit für Arbeiter, in einen Graben zu gelangen. Weitere praktische Ausführungsformen und Vorteile der Erfindung sind nachfolgend im Zusammenhang mit den Zeichnungen beschrieben. Es zeigen:
- Fig. 1: ein Leitersystem für einen Grabenverbau mit einer ersten Variante einer oberen Leiter und einer unteren Leiter in einer Vorderansicht,
- Fig. 2: das Leitersystem aus Fig. 1 in einer Seitenansicht,
- Fig. 3: das Leitersystem aus Fig. 1 in einer Ansicht von oben, und
- Fig. 4: eine zweiten Variante einer oberen Leiter in einer perspektivischen Ansicht von schräg vorne.

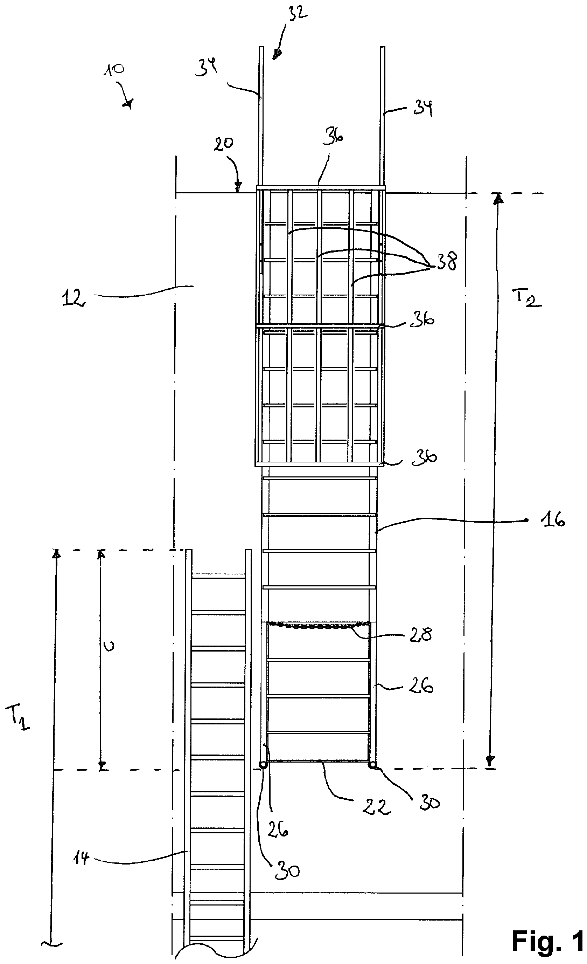

In den Fig. 1 bis 3 ist jeweils ein Leitersystem 10 in Verbindung mit einer Verbauplatte 12 eines Grabenverbaus dargestellt. In diesen Figuren ist nur eine Wand des Grabens dargestellt. Die Verbauplatte 12 bildet die Grabenwand und dient der Abstützung des seitlich des Grabens befindlichen Erdreichs. Sie erstreckt sich vorliegend über einen Teil der Höhe des Grabens und einen Teil der Breite des Grabens.

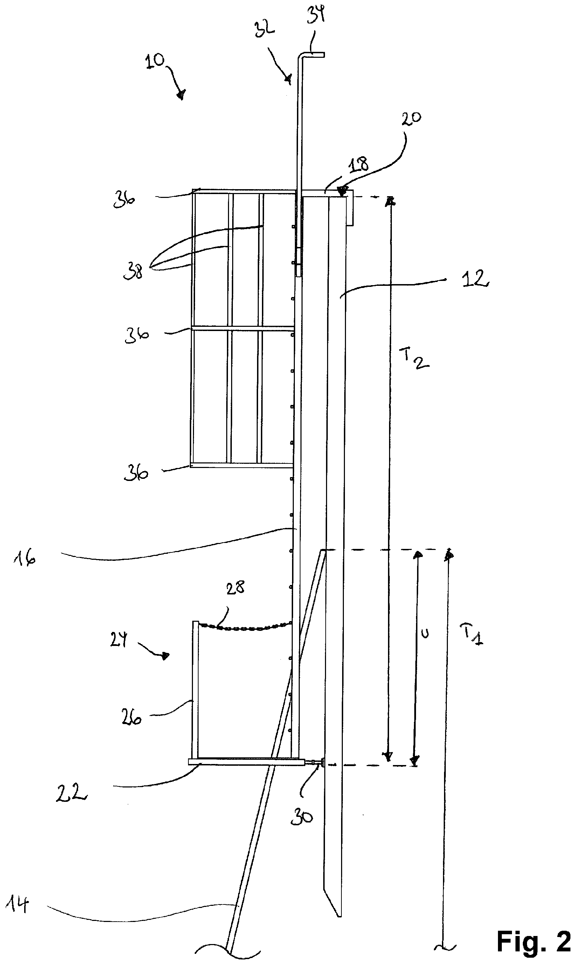

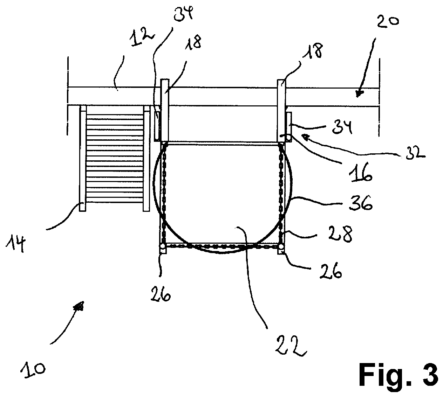

In Fig. 1 ist ein Leitersystem 10 in einer Vorderansicht dargestellt. Die Vorderansicht des im Graben befindlichen Leitersystems 10 entspricht einem Blick auf eine Seitenwand des Grabens bzw. auf die Verbauplatte 12. Die in Fig. 2 gezeigte Ansicht entspricht demnach einem Blick quer zur Verbauplatte 12 in Längsrichtung des Grabens. In Fig. 3 ist eine Ansicht von oben in Richtung des Bodens des Grabens gezeigt.

Das Leitersystem 10 umfasst eine untere Leiter 14, die sich auf einem Boden des Grabens (nicht dargestellt) abstützt und die sich über einen unteren Teilabschnitt T₁ der Höhe des Grabens erstreckt. Zudem umfasst das Leitersystem 10 eine erste Variante einer oberen Leiter 16, die sich über einen oberen Teilabschnitt T₂ der Höhe des Grabens bis zu einem oberen Grabenrand erstreckt. Der obere Rand des Grabens entspricht vorliegend dem oberen Rand 20 der Verbauplatte 12. Die obere Leiter 16 und die untere Leiter 14 sind seitlich versetzt zueinander angeordnet (vgl. auch Fig. 3). Wie in Fig. 1 und 2 gut zu erkennen ist, erstrecken sich die obere Leiter 16 und die untere Leiter 14 in einem Überlappungsbereich U nebeneinander.

Bei der unteren Leiter 14 handelt es sich in dem gezeigten Beispiel um eine Anlegeleiter, welche mit ihrem unteren Ende auf dem Boden des Grabens steht (nicht dargestellt) und sich mit ihrem oberen Ende an der Vorderseite der Verbauplatte 12 abstützt. Die untere Leiter 14 ist in einem Winkel zu der Verbauplatte 12 angeordnet, um einem Arbeiter einen möglichst leichten Auf- und Abstieg zu ermöglichen. Die maximale Fallhöhe der unteren Leiter 14 ist auf die Teillänge T₁ begrenzt.

Die obere Leiter 16 ist vorliegend als Einhängeleiter ausgeführt. Die obere Leiter 16 weist dazu an ihrem oberen Ende zwei Haken 18 auf, mit denen die obere Leiter 16 an den oberen Rand 20 der Verbauplatte 12 eingehängt ist. Dazu umgreifen die Haken 18 die Verbauplatte 12 und liegen sowohl an der Oberseite als auch an der Rückseite der Verbauplatte 12 an.

An dem unteren Ende der oberen Leiter 16 ist eine Plattform 22 angeordnet, welche sich horizontal erstreckt. Die Plattform 22 dient als untere Begrenzung der oberen Leiter 16 und beschränkt die maximale Fallhöhe auf die Teillänge T₂. Die Plattform 22 ist durch ein umlaufendes Geländer 24 gesichert. Das Geländer 24 ist vorliegend durch zwei Vertikalstreben 26 an den Ecken der Plattform 22 und eine Kette 28, die die Vertikalstreben 26 mit der oberen Leiter 16 verbindet, gebildet. Die maximalen Fallhöhen T₁ und T₂ betragen im Ausführungsbeispiel maximal 6 m, vorzugsweise weniger als 4 m.

Der genannte Überlappungsbereich U dient zum Umstieg eines Arbeiters von einer Leiter auf die andere Leiter. Hier ist der Überlappungsbereich U derart realisiert, dass ein Arbeiter, der auf der Höhe der Plattform 22 steht, in aufrechter Haltung mit den Händen sowohl die obere Leiter 16 als auch die untere Leiter 14 greifen kann. In dem gezeigten Beispiel beträgt die Höhe der Überlappungsbereiches U etwa 1,40 m.

Die obere Leiter 16 weist vorliegend einen horizontalen Abstand zu der Vorderseite der Verbauplatte 12 auf. Um einen möglichst vertikalen Verlauf der oberen Leiter 16 zu realisieren, sind an dem unteren Ende der oberen Leiter 16 zwei sich in horizontaler Richtung erstreckende Stützfüße 30 angeordnet, die das untere Ende der oberen Leiter 16 gegen die Vorderseite der Verbauplatte 12 abstützen. Je nach Dicke der Verbauplatte 12 bzw. des Abstandes der oberen Leiter 16 zu der Verbauplatte 12 kann die Länge der Stützfüße 30 variiert werden.

Zusätzlich ist an der oberen Leiter 16 eine Einstiegshilfe 32 in Form von rechts und links am oberen Ende der oberen Leiter 16 angeordneten Handläufen 34, angeordnet. Die Handläufe 34 erstrecken sich von oben nach unten betrachtet zunächst horizontal und dann vertikal, so dass sich ein Arbeiter während des Ein- und Ausstiegs in den Graben daran festhalten kann.

Ferner sind an der oberen Leiter 16 drei Rückenschutzbügel 36 angeordnet, die die Vorderseite der oberen Leiter 16 in Form eines Ringsegments umschließen und durch mehrere vertikal verlaufende Stäbe 38 miteinander verbunden sind.

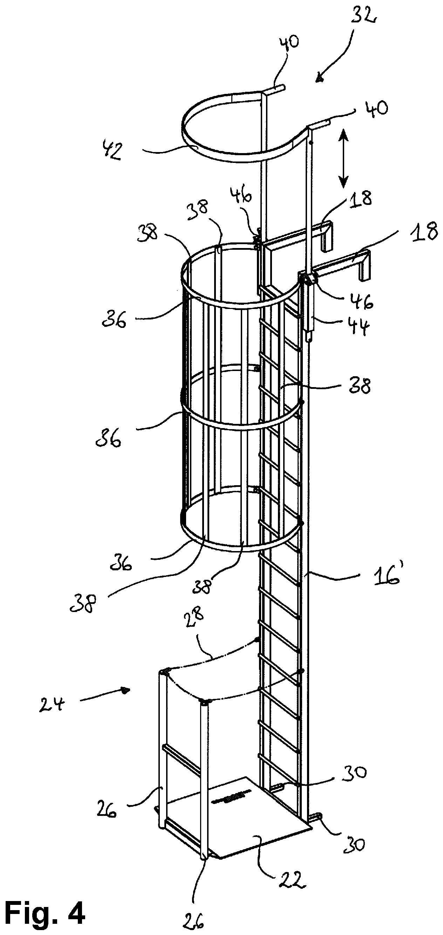

Die Fig. 4 zeigt eine weitere Variante der oberen Leiter 16'. Darin werden für identische oder zumindest funktionsgleiche Bauelemente die gleichen Bezugszeichen verwendet, wie für die Beschreibung der ersten Variante.

Diese obere Leiter 16' kann ebenfalls in Verbindung mit einer unteren Leiter 14 in einem Leitersystem 10 verwendet werden, wie es in den Figuren 1 - 3 dargestellt ist. Der wesentliche Unterschied der in Fig. 4 gezeigten oberen Leiter 16' besteht darin, dass als Einstiegshilfe ein höhenverstellbarer Handlauf 40 mit einem daran befestigten Rückenschutzbügel 42 vorgesehen ist. Der Handlauf 40 ist mit dem Rückenschutzbügel 42 in Richtung des Doppelpfeils höhenverstellbar. Dazu sind seitlich der oberen Leiter 16' zwei Hülsen 44 vorgesehen, in denen der Handlauf 40 jeweils höhenverstellbar aufgenommen ist. Der Handlauf 40 wird über einen mittels Fuß betätigbaren Klemmhebel 46 in der vorgesehenen Höhe festgeklemmt.

Auch bei dieser zweiten Variante der oberen Leiter 16' ist an dem unteren Ende eine Plattform 22 mit einem Geländer 24 angeordnet. Ferner sind hier wie in der Variante der Figuren 1 - 3 mehrere ortsfeste Rückenschutzbügel 36 vorgesehen, welche über vertikale Stäbe 38 miteinander verbunden sind.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche variiert werden.

Insbesondere wird noch auf die Möglichkeit hingewiesen, die obere Leiter 16 und die untere Leiter 14 mittels eines Sicherungselements gegen ein Verrutschen miteinander zu verbinden.

Für Gräben mit einer größeren Tiefe ist es auch möglich ein Leitersystem 10 zur Verfügung zu stellen, welches mehr als zwei Leitern aufweist, insbesondere zwei obere Einhängeleitern in Kombination mit einer auf dem Grund des Grabens aufstehenden untersten Leiter.

### Bezugszeichenliste

- 10: Leitersystem
- 12: Verbauplatte
- 14: untere Leiter
- 16,16': obere Leiter
- 18: Haken
- 20: oberer Rand der Verbauplatte
- 22: Plattform
- 24: Geländer
- 26: Vertikalstreben
- 28: Kette
- 30: Stützfuß
- 32: Einstiegshilfe
- 34: Handlauf
- 36: Rückenschutzbügel
- 38: vertikaler Stab
- 40: höhenverstellbarer Handlauf
- 42: Rückenschutzbügel
- 44: Hülse
- 46: Hebel

## Patentansprüche

1. Grabenverbau mit mindestens einer Verbauplatte (12) und einem Leitersystem umfassend eine untere Leiter (14), die sich vom Boden eines Grabens aus über einen unteren Teilabschnitt (T₁) der Höhe des Grabens erstreckt, und eine obere Leiter (16,16'), die sich über einen oberen Teilabschnitt (T₂) der Höhe des Grabens bis zu einem Grabenrand erstreckt, wobei die obere Leiter (16,16') eine Einhängeleiter zum Einhängen an die Verbauplatte (12) ist, **dadurch gekennzeichnet, dass** an dem unteren Ende der oberen Leiter (16,16') eine Plattform (22) angeordnet ist und dass die untere Leiter (14) eine auf dem Boden des Grabens aufstehende Stehleiter oder Anlegeleiter ist.

2. Grabenverbau nach dem vorstehenden Anspruch, **dadurch gekennzeichnet, dass** die untere Leiter (14) und die obere Leiter (16,16') seitlich zueinander versetzt angeordnet sind, wobei sich die untere Leiter (14) und die obere Leiter (16,16') in einem Überlappungsbereich (U) nebeneinander erstrecken.

3. Grabenverbau nach einem der vorstehenden Ansprüche, **dadurch gekennzeichnet, dass** die obere Leiter (16,16') und/oder die untere Leiter (14) höhenverstellbar ist.

4. Grabenverbau nach einem der vorstehenden Ansprüche, **dadurch gekennzeichnet, dass** die Plattform (22) ein umlaufendes Geländer (24) aufweist.

5. Grabenverbau nach einem der vorstehenden Ansprüche, **dadurch gekennzeichnet, dass** an dem unteren Ende der oberen Leiter (16,16') mindestens ein sich gegen die Grabenwand abstützender Stützfuß (30) angeordnet ist.

6. Grabenverbau nach einem der vorstehenden Ansprüche, **dadurch gekennzeichnet, dass** an der oberen Leiter (16,16') eine Einstiegshilfe (32) angeordnet ist.

7. Grabenverbau nach einem der vorstehenden Ansprüche, **dadurch gekennzeichnet, dass** an der oberen Leiter (16,16') mindestens ein Rückenschutzbügel (36, 42) angeordnet ist.

8. Grabenverbau nach Anspruch 7, **dadurch gekennzeichnet, dass** zumindest der oberste Rückenschutzbügel (42) höhenverstellbar zur oberen Leiter (16') ist.

9. Grabenverbau nach einem der vorstehenden Ansprüche, **dadurch gekennzeichnet, dass** die untere Leiter (14) und die obere Leiter (16,16') über ein Sicherungselement miteinander verbunden sind.

## Claims

1. Trench shoring having at least one shoring plate (12) and a ladder system comprising a lower ladder (14) extending from the bottom of a trench over a lower portion (T₁) of the height of the trench, and an upper ladder (16, 16') extending over an upper portion (T₂) of the height of the trench to a trench edge, wherein the upper ladder (16, 16') is a suspension ladder for suspension on the shoring plate (12), **characterised in that** a platform (22) is arranged at the lower end of the upper ladder (16, 16') and **in that** the lower ladder (14) is a stepladder or lean-to ladder standing on the floor of the trench.

2. Trench shoring according to the preceding claim, **characterized in that** the lower ladder (14) and the upper ladder (16, 16') are arranged laterally offset with respect to one another, the lower ladder (14) and the upper ladder (16, 16') extending side by side in an overlap region (U).

3. Trench shoring according to any one of the preceding claims, **characterized in that** the upper ladder (16,16') and/or the lower ladder (14) is adjustable in height.

4. Trench shoring according to any one of the preceding claims, **characterized in that** the platform (22) comprises a peripheral railing (24).

5. Trench shoring according to any one of the preceding claims, **characterized in that** at the lower end of the upper ladder (16, 16') at least one supporting foot (30) is arranged which rests against the trench wall.

6. Trench shoring according to any one of the preceding claims, **characterized in that** an access aid (32) is arranged on the upper ladder (16, 16').

7. Trench shoring according to any one of the preceding claims, **characterized in that** at least one back protection bar (36, 42) is arranged on the upper ladder (16, 16').

8. Trench shoring according to claim 7, **characterized in that** at least the uppermost back protection bar (42) is adjustable in height relative to the upper ladder (16').

9. Trench shoring according to one of the preceding claims, **characterized in that** the lower ladder (14) and the upper ladder (16, 16') are connected to each other via a securing element.

## Revendications

1. Blindage de tranchée ayant au moins un panneau de blindage (12) et un système d'échelle comprenant une échelle inférieure (14) s'étendant depuis le fond d'une tranchée sur une partie inférieure (T₁) de la hauteur de la tranchée et une échelle supérieure (16, 16') s'étendant sur une partie supérieure (T₂) de la hauteur de la tranchée jusqu'à un bord de tranchée, l'échelle supérieure (16, 16') étant une échelle de suspension destinée à être suspendue au panneau de blindage (12), **caractérisé en ce qu'une** plate-forme (22) est disposée à l'extrémité inférieure de l'échelle supérieure (16, 16') et **en ce que** l'échelle inférieure (14) est un escabeau ou une échelle adossée reposant sur le sol de la tranchée.

2. Blindage de tranchée selon la revendication précédente, **caractérisé en ce que** l'échelle inférieure (14) et l'échelle supérieure (16, 16') sont disposées de manière décalée latéralement l'une par rapport à l'autre, l'échelle inférieure (14) et l'échelle supérieure (16, 16') s'étendant côte à côte dans une zone de chevauchement (U).

3. Blindage de tranchée selon l'une des revendications précédentes, **caractérisé en ce que** l'échelle supérieure (16, 16') et/ou l'échelle inférieure (14) est réglable en hauteur.

4. Blindage de tranchée selon l'une des revendications précédentes, **caractérisé en ce que** la plate-forme (22) comporte un garde-corps circonférentiel (24).

5. Blindage de tranchée selon l'une des revendications précédentes, **caractérisé en ce qu'au** moins un pied d'appui (30) prenant appui sur la paroi de la tranchée est disposé à l'extrémité inférieure de l'échelle supérieure (16, 16').

6. Blindage de tranchée selon l'une des revendications précédentes, **caractérisé en ce qu'une** aide à l'accès (32) est disposée sur l'échelle supérieure (16, 16').

7. Blindage de tranchée selon l'une des revendications précédentes, **caractérisé en ce qu'au** moins une barre de protection dorsale (36, 42) est disposée sur l'échelle supérieure (16, 16').

8. Blindage de tranchée selon la revendication 7, **caractérisé en ce qu'**au moins la barre de protection dorsale la plus haute (42) est réglable en hauteur par rapport à l'échelle supérieure (16').

9. Blindage de tranchée selon l'une des revendications précédentes, **caractérisé en ce que** l'échelle inférieure (14) et l'échelle supérieure (16, 16') sont reliées entre elles par un élément de fixation.
